# EUROPÄISCHE PATENTSCHRIFT

(11) **EP 1 207 074 B1**
(45) Veröffentlichungstag und Bekanntmachung des Hinweises auf die Patenterteilung: **07.06.2006**
(21) Anmeldenummer: 01124563.6
(22) Anmeldetag: 15.10.2001
(51) Int. Cl.: B60N 2/72, A47C 7/28

(54) **Sitz- und/oder Liegevorrichtung, insbesondere Passagiersitz mit verstellbarer Rückenlehne**
Seat and/or bed device, particularly passenger seat with adjustable backrest
Siège et/ou dispositif couchette, en particulier siège de passager avec dossier réglable

(30) Priorität: 17.11.2000 DE 10057208
(43) Veröffentlichungstag der Anmeldung: 22.05.2002
(73) Patentinhaber: Airbus Deutschland GmbH, 21129 Hamburg (DE)
(72) Erfinder: Schmidt-Schäffer, Tobias, Dipl.-Des., 70174 Stuttgart (DE)
(74) Vertreter: Hansmann, Dierk

(56) Entgegenhaltungen:
- EP-A- 0 639 479
- DE-A- 19 828 254
- DE-U- 29 901 156

## Beschreibung

Die Erfindung betrifft einen Passagiersitz mit verstellbarer Rückenlehne, bestehend aus einem Sitzrahmen eines Sitzteils und einem damit verbundenen Lehnenrahmen einer Rückenlehne, wobei eine Sitzflächenfederung innerhalb des Sitzrahmens vorgesehen ist, die Mittel zum Verstellen der Flächensteifigkeit der Sitzfläche von einer harten Steifigkeit in eine weichere Steifigkeit aufweist.

Aus DE-PS 198 28 254 ist eine Sitzvorrichtung bekannt, die für einen Sitzenden eine anatomisch verbesserte Abstützung ermöglichen soll und sich den Sitzhaltungen des Körpers vom Sitzenden anpassen kann. Dafür ist ein Basisteil aus quersteifem, aber längsflexiblem, gewelltem Federblech vorgesehen, dessen Wellung in Sitzlängsrichtung verläuft. Das quersteife und längsflexible Basisteil ist innerhalb eines Trägerahmens eingehängt und stellt sich entsprechend der individuellen Sitzwünsche ein, d.h. bei unterschiedlichen Sitzhaltungen verlagert sich das Basisteil entsprechend der Sitzhaltung. Eine mögliche Anpassung an verschiedene Sitzhaltungen ist aus dieser Lösung somit mittels dem federnden Element als Basisteil bekannt, jedoch kann nicht eine an einen Sitz- oder einen Liegezustand angepasste Federung des Sitzes erreicht werden. Da beim aufrechten Sitzen das gesamte Körpergewicht auf eine relativ kleine Auflagefläche verteilt ist, muss die Federung der Sitzfläche entsprechend härter sein als beim Liegen. Wenn man in einem Passagiersitz mit Liegefunktion mit einer für das Sitzen abgestimmten härteren Sitzflächenfederung ein längeres Liegen vorsieht, kann es somit beim Liegen unkomfortabel für einen Passagier sein und zu Rückenschmerzen führen. Wenn die Sitzfläche zu weich gepolstert ist, lassen sich ergonomische Anforderungen an das Sitzen nicht realisieren und gerade bei langen Sitzphasen (beispielsweise bei Langzeitflügen) kann es zu einer Verminderung des Wohlbefindens des Passagiers kommen.

Aus DE 299 01 156 U1 ist ein Sitzmöbel bekannt, welches elastische Stützelemente aufweist. Je nach Körpermasse können die Stützelemente härter oder weicher ausgebildet sein. Dies wird mit einem Draht erreicht, welcher durch einen Spannmechanismus gezogen wird.

Der Erfindung liegt daher die Aufgabe zugrunde, für einen gattungsgemäßen Passagiersitz eine Sitzflächenfederung zu erreichen, der jeweils für das Sitzen und Liegen eines Passagiers auf dieser Vorrichtung einen optimalen Komfort bietet und ergonomische Gesichtspunkte berücksichtigt.

Die Aufgabe wird bei einem gattungsgemäßen Passagiersitz durch die im Patentanspruch 1 bzw. 4 genannten Merkmalskombination gelöst.

Dabei ist insbesondere von Vorteil, dass ohne einen großen Aufwand eine Verstellung der Sitzflächenfederung eines Passagiersitzes erreicht wird. Beim normalen Sitzen wird eine härtere Einstellung vorgenommen und für die Liegefunktion kann auf einfache Weise eine relativ weiche Federung der Sitzfläche erreicht werden, um auch ein komfortables Liegen zu ermöglichen.

Weiterbildungen und vorteilhafte Ausgestaltungen sind in den Unteransprüchen 2 und 3 sowie 5 bis 9 angegeben sowie in der nachfolgenden Beschreibung erläutert.

In der Zeichnung ist ein Ausführungsbeispiel der Erfindung dargestellt, das nachstehend anhand der Figuren 1 bis 6 näher beschrieben ist. In den Figuren sind gleiche Bauteile mit gleichen Bezugszeichen versehen.

Es zeigen:
- Fig. 1: eine Perspektivdarstellung eines erfindungsgemäßen Passagiersitzes in Sitzstellung,
- Fig. 2: der Passagiersitz gemäß Fig. 1 in Liegeposition,
- Fig. 3: eine Darstellung des Rahmengestells des Passagiersitzes mit einer erfindungsgemäßen Sitzflächenfederung,
- Fig. 4: das Rahmengestell gemäß Fig. 3 in Liegeposition und
- Fign. 5 u. 6: Detaildarstellung der Sitzflächenfederung in den Zuständen Sitzposition und Liegeposition.

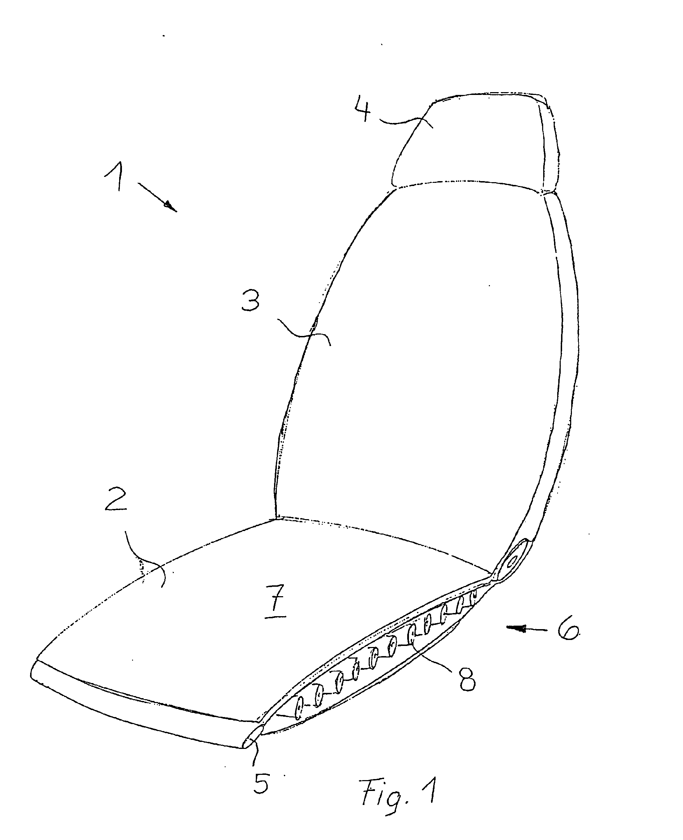

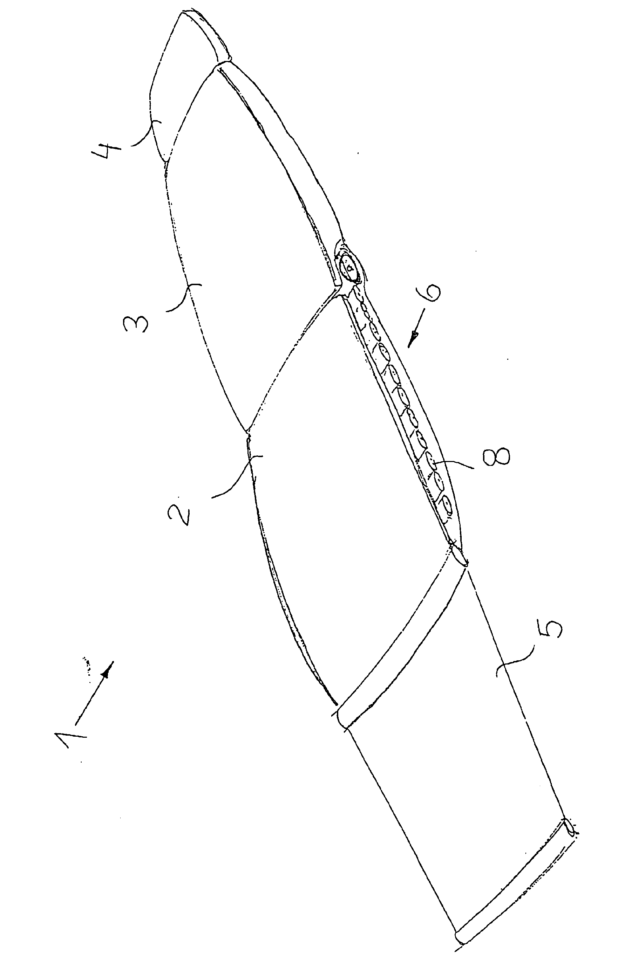

Die Figuren 1 und 2 zeigen in Perspektivdarstellung eine Sitz- und/oder Liegevorrichtung 1, die im wesentlichen ein Sitzteil 2 und eine verstellbare Rückenlehne 3 aufweist. Eine derartige Sitz- und/oder Liegevorrichtung 1 kann insbesondere als Passagiersitz in Verkehrsmitteln eingesetzt werden. Ein Haltegestell bzw. eine Befestigung für den Passagiersitz 1 auf einem Fußboden ist nicht dargestellt und ist gemäß üblichen, dem Stand der Technik entsprechenden Lösungen vorzusehen. Die Darstellung des Passagiersitzes 1 zeigt die Fig. 1 in normaler Sitzposition und die Fig. 2 in Liegeposition mit nach hinten abgesenkter Rückenlehne 3. Zur Komfortverbesserung kann am Passagiersitz 1 eine Kopfstütze 4 und/oder ein Fußteil 5 vorgesehen sein, um insbesondere für die Liegeposition dem Passagier ein entspanntes Ruhen zu ermöglichen. In Fig. 2 ist ersichtlich, dass das Fußteil 5 an der vorderen Kante des Sitzteiles 2 angeordnet ist und bei Bedarf rolloartig ausgefahren werden kann. Als Material ist strapazierfähiges Gewebe vorzusehen, beispielsweise Kunststoffgewebe. Am Sitzteil 2 ist eine Sitzflächenfederung 6 vorgesehen, die von einem Polsterelement 7 überzogen ist. Da beim aufrechten Sitzen das gesamte Körpergewicht eines Passagiers auf eine relativ kleine Auflagefläche verteilt ist, muss die Sitzflächenfederung 6 der Sitzfläche 2 härter als beim Liegen ausgebildet sein. Wenn man beim Passagiersitz 1 die Liegefunktion mit einer für das Sitzen abgestimmten härteren Sitzflächenfederung für ein längeres Liegen vorsieht, kann es unkomfortabel für einen Passagier sein und zu Rückenschmerzen führen. Erfindungsgemäß ist somit vorgesehen, dass die Sitzflächenfederung 6 auf die Sitz- oder Liegefunktion einstellbar ist, um gerade bei langen Sitz- und/oder Liegephasen (beispielsweise bei Langzeitflügen) mit beengten Platzverhältnissen ergonomische Anforderungen realisieren zu können und das Wohlbefinden der Passagiere zu steigern. Die Sitzflächenfederung 6 ist mit quer zur Sitzlängsrichtung angeordneten Sitzlamellen 8 versehen, die entsprechend der Funktion Sitzen oder Liegen eine unterschiedlich harte Federung aufweisen. Die Sitzlamellen 8 bestehen aus Streben, deren Querschnittsprofilform so ausgeführt sind, dass eine Verstellung der Streben jeweils unterschiedliche Steifigkeiten erreicht werden können. Die Querschnittsprofile können beispielsweise rechteckförmig oder ovalförmig ausgebildet sein. In Fig. 1 ist ersichtlich, dass eine relativ harte Federung der Sitzfläche mittels hochkant angeordneter Sitzlamellen 8 erreicht wird, demgegenüber in Fig. 2 durch Verdrehung der Lamellen 8 in eine flache Anordnung die Steifigkeit der Sitzlamellen 8 verringert wird und damit die Federung der Sitzfläche weicher wird.

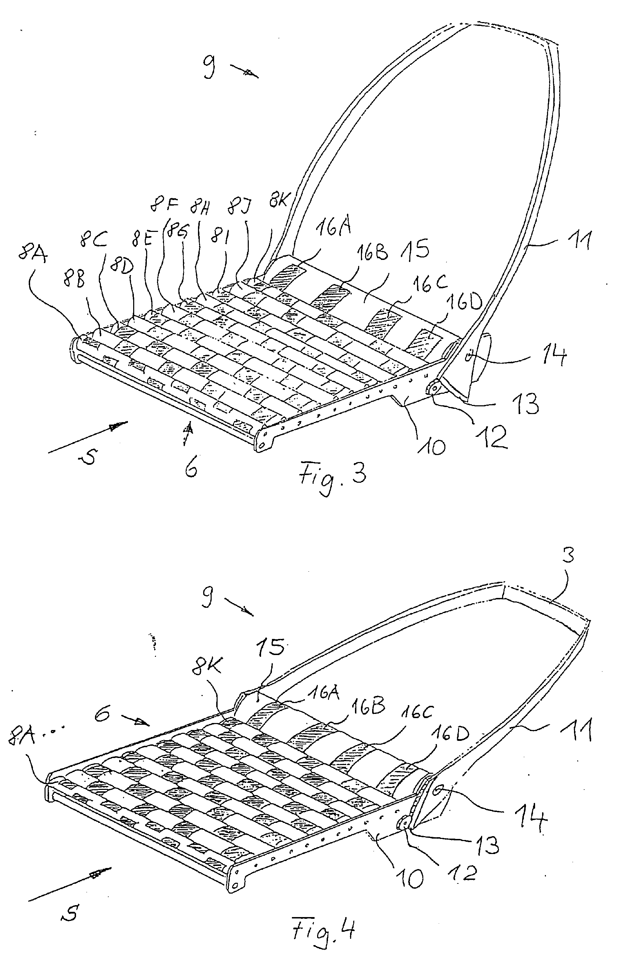

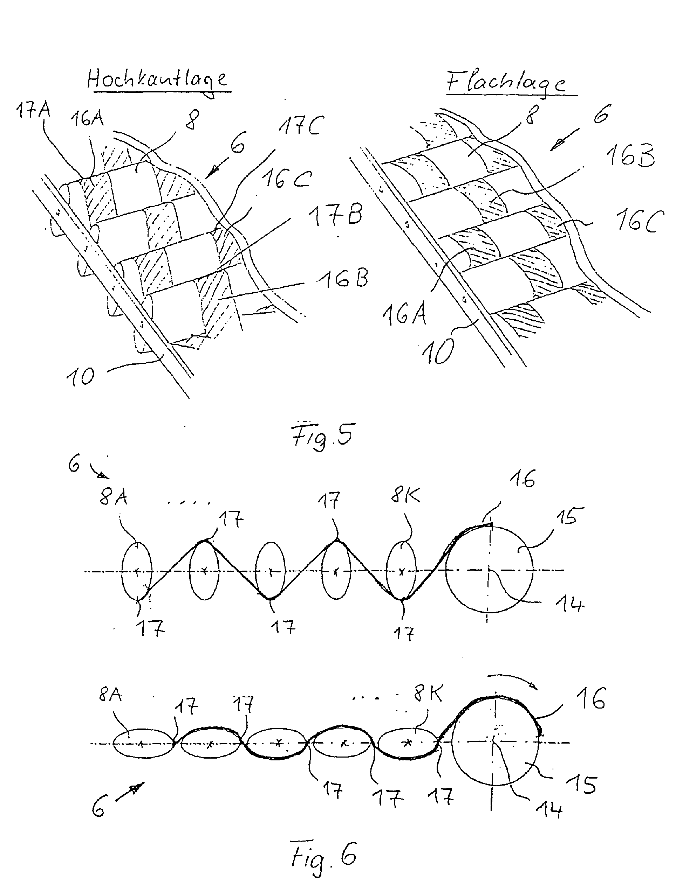

In den Figuren 3 und 4 ist als Einzelheit des Passagiersitzes 1 ein Rahmengestell 9 dargestellt. Das Rahmengestell 9 ist gebildet aus einem Sitzrahmen 10 und einem Lehnenrahmen 11. Der Lehnenrahmen 10 ist verstellbar, so dass - wie in Fig. 4 ersichtlich ist - der Passagiersitz 1 auch in Liegeposition gebracht werden kann. Die Verstellung der Rückenlehne 3 kann elektrisch oder mechanisch erfolgen, wobei Verstellmechanismen bekannter Art Anwendung finden können. Ein beispielsweise elektrisch angetriebenes Antriebselement 12, wie ein Zahnrad, kann über eine Wirkverbindung mit einer am Lehnenrahmen 11 angeordneten Zahnstange 13 (nur schematisch dargestellt) den Lehnenrahmen 11 absenken. Die Veränderung der Härte bzw. Steifigkeit der Sitzflächenfederung 6 ist an das Absenken des Lehnenrahmens 11 gekoppelt. In Drehachse 14 der Rückenlehne 3 ist eine Welle 15 angeordnet, die fest mit dem Lehnenrahmen 11 verbunden ist. Die Sitzlamellen 8 - in der gezeigten Ausführungsform sind Sitzlamellen 8A bis 8K vorgesehen - sind quer zur Sitzlängsrichtung S angeordnet und am Sitzrahmen 10 drehbar gelagert befestigt. Mittels Gurte 16A bis 16D wird zwischen der Welle 15 und den Sitzlamellen 8A bis 8K eine Wirkverbindung hergestellt. In der dargestellten Ausführungsform sind vier Gurte 16A, 16B, 16C und 16D vorgesehen, die jeweils ausgehend von einer Fixierung an der Welle 15 um die Sitzlamellen 8A bis 8K wellenförmig verlaufen und je Sitzlamelle 8A bis 8K an einem Befestigungspunkt 17A, 17B, 17C und 17D fixiert sind. Die Befestigungspunkte 17A, 17B, 17C und 17D an den Sitzlamellen sind so gewählt, dass bei einer Drehung der Welle 15 um die Drehachse 14 beim Absenken der Rückenlehne 3 die Gurte 16A bis 16D die Sitzlamellen 8 von der Hochkantlage in die Flachlage verdrehen. Die Hochkant- und die Flachlage der Sitzlamellen 8A bis 8K sind als Einzelheitdarstellungen in den Figuren 5 und 6 detailliert gezeigt.
Bei einem Hochklappen der Rückenlehne 3 ist vorgesehen, dass die Sitzlamellen 8A bis 8K ebenfalls wieder in ihre Hochkantlage zurückgedreht werden. Das kann entweder durch Federeinrichtungen, beispielsweise Spiralfedern (nicht gezeigt) an den Anschlusspunkten der einzelnen Sitzlamellen 8A bis 8K am Sitzrahmen 10 realisiert werden, wobei die Sitzlamellen 8A bis 8K federbelastet in die Flachlage gedreht werden und aufgrund der Zugkraft vom Gurt in dieser Lage verweilen und bei Wegfall der Gurtzugkraft wieder zurück in ihre Ausgangslage gehen, oder mindestens die im Bereich der Vorderkante des Sitzrahmens 10 vorderste Sitzlamelle 8A weist eine derartige Federeinrichtung aus die bei Wegfall der Gurtzugkraft in Richtung Rückenlehne die Lamelle 8A mittels Federkraft wieder in die Hochkantposition bringen und über die Befestigungspunkte 17A bis 17D vom Gurt 16A bis 16D die weiteren Lamellen 8B bis 8K ebenfalls in die Hochkantlage gedreht werden.
In einer weiteren, nicht bildlich dargestelltem Ausführungsform können auch die Gurte 16A bis 16D zumindest in bestimmten Bereichen elastisch ausgeführt sein und aufgrund ihrer Elastizität ein Drehen der Sitzlamellen 8A bis 8K zurück in die Ausgangslage (hochkant) bewirken oder zumindest unterstützen.

In den Figuren 5 und 6 sind in Detaildarstellungen ausschnittsweise die Sitzlamellen 8A bis 8K ersichtlich, die mittels der Gurte 16A bis 16D miteinander verbunden sind. Anhand der Seitenansicht in Fig. 6 ist eine mögliche Schlinganordnung der Gurte 16A bis 16D um die Sitzlamellen 8A bis 8K sowie die Befestigungspunkte 17A bis 17D ersichtlich.

Die erfindungsgemäß verstellbare Sitzflächenfederung 6 ist in der gezeigten Ausführung nur ein Anwendungsfall. Es ist beispielsweise möglich, dass neben der Sitzfläche 6 auch die Rückenlehne 3 mit verstellbaren Lamellen innerhalb des Lehnenrahmens vorgesehen ist und eine Einstellbarkeit der Härte der Lehne mittels der beschriebenen erfindungsgemäßen Einrichtungen erfolgen kann.

### Bezugszeichenliste

| | | |
|---|---|---|
| 1 | - | Passagiersitz |
| 2 | - | Sitzteil |
| 3 | - | Rückenlehne |
| 4 | - | Kopfstütze |
| 5 | - | Fußteil |
| 6 | - | Sitzflächenfederung |
| 7 | - | Sitzpolster (Polsterelement) |
| 8 | - | Sitzlamellen (8A - 8K) |
| 9 | - | Rahmengestell |
| 10 | - | Sitzrahmen |
| 11 | - | Lehnenrahmen |
| 12 | - | Antriebselement (Zahnrad) |
| 13 | - | Zahnstange |
| 14 | - | Drehachse der Rückenlehne |
| 15 | - | Welle |
| 16 | - | Gurt (16A - 16D) |
| 17 | - | Befestigungspunkt (17A - 17D) |

## Patentansprüche

1. Passagiersitz mit verstellbarer Rückenlehne (3), bestehend aus einem Sitzrahmen (10) eines Sitzteils (2) und einem damit verbundenen Lehnenrahmen (11) der Rückenlehne (3), wobei eine Sitzflächenfederung (6) innerhalb des Sitzrahmens (10) vorgesehen ist, die Mittel zum Verstellen (8, 15, 16, 17) der Flächensteifigkeit der Sitzfläche von einer harten Steifigkeit für die Sitzposition in eine weichere Steifigkeit für die Liegeposition aufweist, **dadurch gekennzeichnet, dass** die Sitzflächenfederung (6) aus Sitzlamellen (8, 8A - 8K) gebildet ist, die quer zur Sitzlängsrichtung innerhalb des Sitzrahmens (10) angeordnet und drehbar gelagert sind, wobei mittels einer Drehung der Sitzlamellen (8, 8A - 8K) eine Veränderung der Sitzhärte erreichbar ist und die Drehung der Sitzlamellen (8, 8A - 8K) an die Verstellung der Rückenlehne (3) gekoppelt ist.

2. Passagiersitz nach Anspruch 1,
**dadurch gekennzeichnet, dass**
der Querschnitt einer Sitzlamelle (8, 8A - 8K) so ausgebildet ist, dass in Querschnittslängsrichtung eine größere Steifigkeit als in Querschnittsquerrichtung erreicht ist.

3. Passagiersitz nach einem der Ansprüche 1 oder 2,
**dadurch gekennzeichnet, dass**
der Querschnitt der Sitzlamellen (8, 8A - 8K) ovalförmig, stegförmig oder rechteckförmig ausgebildet ist.

4. Passagiersitz mit verstellbarer Rückenlehne (3), bestehend aus einem Sitzrahmen (10) eines Sitzteils (2) und einem damit verbundenen Lehnenrahmen (11) der Rückenlehne (3), wobei eine Sitzflächenfederung (6) innerhalb des Sitzrahmens (10) vorgesehen ist, die Mittel zum Verstellen (8, 15, 16, 17) der Flächensteifigkeit der Sitzfläche von einer harten Steifigkeit für die Sitzposition in eine weichere Steifigkeit für die Liegeposition aufweist, **dadurch gekennzeichnet, dass** der Lehnenrahmen (11) im Bereich einer Drehachse (14) der Verstellbewegung zumindest einen Befestigungspunkt zumindest eines ersten Endes eines Gurtes (16A - 16D) aufweist und der zumindest eine Gurt (16A - 16D) an Befestigungspunkten (17A - 17D) mit Sitzlamellen (8, 8A - 8K) verbunden ist, wobei der zumindest eine Gurt (16A - 16D) wellenförmig um die Sitzlamellen (8, 8B bis 8K) geführt und an der im Bereich der Vorderkante des Sitzrahmens (10) vordersten Sitzlamelle (8A) mit dem zweiten Ende befestigt ist.

5. Passagiersitz nach Anspruch 4,
**dadurch gekennzeichnet, dass**
am Lehnenrahmen (11) eine Welle (15) fest angeordnet ist, wobei die Wellenachse identisch mit der Drehachse (14) vom Lehnenrahmen (11) ist, der Befestigungspunkt des ersten Gurtendes (16A - 16D) auf dem Umfang der Welle (15) vorgesehen ist und bei Drehung des Lehnenrahmens (11) in Liegeposition am Umfang der Welle (15) eine Umwicklung des zumindest einen Gurtes (16A - 16D) erfolgt und die Sitzlamellen (8A - 8K) durch Verschiebung des Gurtes (16A -16D) in Rückenlehnenrichtung in eine Flachlage drehbar sind.

6. Passagiersitz nach einem der Ansprüche 4 oder 5,
**dadurch gekennzeichnet, dass**
bei Drehung des Lehnenrahmens (11) in die Ausgangslage die Sitzlamellen (8, 8A - 8K) in die Hochkantlage drehbar sind.

7. Passagiersitz nach Anspruch 6,
**dadurch gekennzeichnet, dass**
mindestens die im Bereich der Vorderkante des Sitzrahmens (10) erste Sitzlamelle (8A) oder mehrere Sitzlamellen (8A - 8K) mit einer Federeinrichtung zum Erreichen der Ausgangslage versehen sind.

8. Passagiersitz nach einem der Ansprüche 4 bis 7,
**dadurch gekennzeichnet, dass**
der zumindest eine Gurt (16A - 16D) mindestens bereichsweise elastisch ausgeführt ist.

9. Passagiersitz nach einem der vorangegangenen Ansprüche,
**dadurch gekennzeichnet, dass**
ein Fußteil (5) mit einer rolloartig herausfahrbaren Abstützfläche im Bereich der Vorderkante des Sitzrahmens (10) angeordnet ist.

## Claims

1. Passenger seat with an adjustable back rest (3), comprising a seat frame (10) of a seat part (2) and a rest frame (11) of the back rest (3) connected to it, in which a seating surface spring arrangement (6) is provided inside the seat frame (10), having means for adjusting (8, 15, 16, 17) the surface rigidity of the seat surface from a hard rigidity for the upright position to a softer rigidity for the reclined position, **characterised in that** the seating surface spring arrangement (6) is made up of seat cross-members (8, 8A - 8K) disposed inside the seat frame (10) transversely to the seat longitudinal direction and mounted so as to be rotatable, whereby a change in the seat hardness can be achieved by rotating the seat cross-members (8, 8A - 8K) and the rotation of the seat cross-members (8, 8A - 8K) is coupled with the displacement of the back rest (3).

2. Passenger seat as claimed in claim 1,
**characterised in that**
the cross-section of a seat cross-member (8, 8A - 8K) is designed so that a more pronounced rigidity is achieved in the cross-sectional longitudinal direction than in the cross-sectional transverse direction.

3. Passenger seat as claimed in one of claims 1 or 2,
**characterised in that**
the cross-section of the seat cross-members (8, 8A - 8K) is oval-shaped, strip-shaped or rectangular-shaped.

4. Passenger seat with adjustable back rest (3)
comprising a seat frame (10) of a seat part (2) and a rest frame (11) of the back rest (3) connected to it, in which a seating surface spring arrangement (6) is provided inside the seat frame (10), having means for adjusting (8, 15, 16, 17) the surface rigidity of the seating surface from a hard rigidity for the upright position to a softer rigidity for the reclined position, **characterised in that** the rest frame (11) has at least one anchoring point of at least a first end of a belt (16A - 16D) in the region of a rotation axis (14) of the adjusting movement and the at least one belt (16A - 16D) is attached to seat cross-members (8, 8A - 8K) at anchoring points (17A - 17D), and at least one belt (16A - 16D) is guided around the seat cross-members (8, 8B - 8K) in a waved pattern and is secured by the second end to the foremost seat cross-member (8A) in the region of the front edge of the seat frame (10).

5. Passenger seat as claimed in claim 4,
**characterised in that**
a shaft (15) is fixedly disposed on the rest frame (11), the shaft axis of which is identical to the rotation axis (14) of the rest frame (11) and the anchoring point of the first belt end (16A - 16D) is provided on the periphery of the shaft (15) and when the rest frame (11) is rotated into the reclined position, the at least one belt (16A - 16D) is wrapped around the periphery of the shaft (15) and the seat cross-members (8A - 8K) can be rotated by displacing the belt (16A - 16D) into a flat position in the back rest direction.

6. Passenger seat as claimed in one of claims 4 or 5,
**characterised in that**
when the rest frame (11) is rotated into the initial position, the seat cross-members (8, 8A - 8K) can be rotated into the edge uppermost position.

7. Passenger seat as claimed in claim 6,
**characterised in that**
at least the first seat cross-member (8A) in the region of the front edge of the seat frame (10) or several seat cross-members (8A - 8K) is/are provided with a spring arrangement for obtaining the initial position.

8. Passenger seat as claimed in one of claims 4 to 7,
**characterised in that**
the at least one belt (16A - 16D) is designed to be elastic in at least certain regions.

9. Passenger seat as claimed in one of the preceding claims,
**characterised in that**
a foot part (5) with a roller-type extractable support surface is disposed in the region of the front edge of the seat frame (10).

## Revendications

1. Siège de passager à dossier réglable (3) composé d'un cadre d'assise (10), d'une partie d'assise (2) et d'un cadre de dossier (11) relié à cette partie d'assise, avec, à l'intérieur du cadre d'assise (10) une suspension de surface d'assise (6) qui présente des moyens de réglage (8, 15, 16, 17) de la dureté superficielle de la surface d'assise, en allant d'une dureté forte pour une position assise à une dureté plus faible pour la position allongée, **caractérisé en ce que** la suspension élastique de surface d'assise (6) est constituée de lamelles d'assise (8, 8A - 8K) qui sont disposées à l'intérieur du cadre d'assise (10) transversalement à la direction longitudinale du siège, et qui peuvent tourner, une rotation des lamelles d'assise (8, 8A - 8K) permettant de faire varier la dureté du siège, cette rotation étant couplée avec le déplacement du dossier de siège (3).

2. Siège de passager selon la revendication 1, **caractérisé en ce que** la section d'une lamelle d'assise (8, 8A - 8K) est constituée de manière que la lamelle présente, selon la direction longitudinale de la section, une dureté plus grande que selon la direction transversale de la section.

3. Siège de passager selon la revendication 1 ou 2, **caractérisé en ce que** la section des lamelles d'assise (8, 8A - 8K) a la forme d'un ovale, d'une barre ou d'un rectangle.

4. Siège de passager à dossier réglable (3) composé d'un cadre d'assise (10), d'une partie d'assise (2) et d'un cadre de dossier (11) relié à cette partie d'assise, avec, à l'intérieur du cadre d'assise (10) une suspension de la surface d'assise (6) qui présente des moyens de réglage (8, 15, 16, 17) de la dureté superficielle de la surface d'assise, en allant d'une dureté forte pour une position assise à une dureté plus faible pour la position allongée, **caractérisé en ce que** le cadre de dossier (1), dans la zone d'un axe de rotation (14) de son mouvement de déplacement, présente au moins un point de fixation pour au moins une première extrémité d'une ceinture (16A - 16D), et cette ceinture, au nombre d'une au moins, est reliée aux lamelles d'assise (8, 8A - 8K) en des points de fixation (17A - 17D), en passant de manière ondulée autour des lamelles d'assise (8B à 8K) pour venir se fixer par une seconde extrémité à la lamelle d'assise (8A) située la plus en avant dans la zone du bord avant du cadre d'assise (10).

5. Siège de passager selon la revendication 4, **caractérisé en ce que** sur le cadre de dossier (11) est montée fixement une onde (15) dont l'axe est identique à l'axe de rotation (14) du cadre de dossier (11), le point de fixation de la première extrémité de ceinture (16A - 16D) étant prévu à la périphérie de l'onde (15), et quand le cadre de dossier (11) tourne pour venir en position allongée, il se produit à la périphérie de l'onde (15) un enroulement d'au moins une ceinture (16A - 16D) de sorte que les lamelles d'assise (8A - 8K) par un glissement de la ceinture (16A - 16D) dans la direction du dossier, peuvent tourner pour venir prendre une position à plat.

6. Siège de passager selon la revendication 4 ou 5, **caractérisé en ce que** par une rotation du cadre de dossier (11) le ramenant à sa position initiale, les lamelles d'assise (8, 8A - 8K) peuvent tourner pour venir dans la position à bord dressé.

7. Siège de passager selon la revendication 6, **caractérisé en ce qu'**au moins la première lamelle d'assise (8A) située dans la zone du bord avant du cadre d'assise (10), ou plusieurs lamelles d'assise (8A - 8K) sont équipées d'un dispositif élastique pour atteindre la position initiale.

8. Siège de passager selon une des revendications 4 à 7, **caractérisé en ce qu'**au moins une ceinture (16A - 16D) est élastique au moins dans une certaine partie.

9. Siège de passager selon une des revendications précédentes, **caractérisé en ce qu'**une partie de pied (5), équipée d'une portée d'appui pouvant être déployée à la manière d'un store, est disposée dans la zone du bord avant du cadre d'assise (10).
